# EUROPEAN PATENT APPLICATION

(11) **EP 4 851 496 A1**
(43) Date of publication of application: **09.12.2026**
(21) Application number: 25305823.4
(22) Date of filing: 05.06.2025
(51) Int. Cl.: F16H 48/38

(54) **OUTPUT SHAFT ASSEMBLY**

(71) Applicant: Meritor Industrial Products Saint-Etienne, 42000 Saint-Étienne (FR)
(72) Inventor: BERMOND, Antonin, 42000 Saint-Étienne (FR); KUCHARSKI, Cyril, 42000 Saint-Étienne (FR); MELLA, Philippe, 42000 Saint-Étienne (FR); RAMOUSSE, Vincent, 42000 Saint-Étienne (FR); RIVAUD, Benjamin, 42000 Saint-Étienne (FR)
(74) Representative: Edson, Russell Gregory

(57) **Abstract**

In one aspect an output shaft assembly for a differential case assembly is provided. The output shaft assembly (63) for a differential case assembly (6) comprising a differential gear arrangement (62) configured to transfer power to output shafts of the differential case assembly (6), the output shaft assembly (63) comprising: a first output shaft (63a) configured to output power from a first output side (620) of the differential gear arrangement (62); a second output shaft (63b) configured to output power from a second output side (621) of the differential gear arrangement 62; and a tie rod (63c) configured to connect the first output shaft (63a) with the second output shaft (63b) and retain them together in the differential gear arrangement (62).

## Description

### Technical Field

The present disclosure relates to an output shaft assembly for a differential case assembly and a differential case assembly for a differential carrier housing, wherein the differential case assembly comprises the output shaft assembly.

### Background

Output shafts in a differential case assembly transfer power from the differential gear arrangement to the wheels of a vehicle. The differential gear arrangement allows the wheels on opposite sides of an axle to rotate at different speeds, which can aid smooth turning, grip and handling in a turn.

Output shaft assemblies need to provide proper alignment, provide efficient power transfer and resistance to wear and tear. Also, the process of assembling and disassembling the output shafts can be complex and time-consuming, affecting maintenance and repair efficiency. Existing designs may not provide adequate support and stability, resulting in premature failure of components under high stress conditions.

The present disclosure aims to provide one or more improvements over the prior art.

### Summary of Disclosure

Aspects and examples disclosed herein provide an output shaft assembly for a differential case assembly and a differential case assembly for a differential carrier housing.

In one aspect an output shaft assembly for a differential case assembly is provided. The differential case assembly may comprise a differential gear arrangement. The differential gear arrangement may be configured to transfer power to output shafts of the output shaft assembly. The output shaft assembly may comprise a first output shaft and a second output shaft. The first output shaft may be configured to output power from a first output side of the differential gear arrangement. The second output shaft may be configured to output power from a second output side of the differential gear arrangement. The output shaft assembly may comprise a tie rod. The tie rod may be configured to connect the first output shaft with the second output shaft. The tie rod may retain the first output shaft and the second output shaft in the differential gear arrangement. The first output shaft may be a single-piece component. The second output shaft may be a single-piece component. The first output shaft and the second output shaft may be identical or substantially the same. The first output shaft may be configured to be directly or operationally connected to a cardan shaft or an axle shaft. The second output shaft may be configured to be directly or operationally connected to a cardan shaft or an axle shaft.

This arrangement can provide a robust output shaft assembly. This arrangement can provide an output shaft assembly that is easy to assemble and maintain. The tie rod can retain the output shafts to one another. The tie rod can retain the output shafts with respect to the differential case assembly or a differential case of the differential case assembly. This may eliminate the need for retainment features such as holes or recesses provided in the output shafts, or recesses, or circlips, thereby improving their durability. By avoiding the use of drilled holes and other weakening features, the output shafts can be more robust. The tie rod can further provide additional structural support to the output shafts, helping them resist forces exerted by the cardan shafts. This support can reduce the risk of deformation or misalignment under load, thereby increasing the durability of the output shafts. This output shaft assembly arrangement can improve the bending resistance of the output shafts. The design can further allow for easy installation in, and removal of the output shafts from, a differential case assembly, making maintenance and service more efficient and less time-consuming.

The first output shaft may comprise an opening for the tie rod. The opening may be a first central bore. The second output shaft may comprise an opening for the tie rod. The opening may be a second central bore. The tie rod may be configured to extend through the first central bore and through the second central bore. An end portion of the tie rod may be received by the first output shaft. An opposite end portion to the said end portion of the tie rod may be received by the second output shaft.

Accordingly, the tie rod can efficiently maintain the alignment of the output shafts axially. Proper alignment can aid the smooth operation of the differential, as misaligned shafts can lead to mechanical issues and reduced performance. Further, this design can allow for straightforward insertion of the tie rod through the central bores, simplifying the assembly process.

The tie rod may be a one-piece rod. The tie rod may have a straight profile, optionally a profile which is substantially straight, or which is straight at least in the middle of the tie rod. The tie rod may have two ends, at least one of which may have a smaller diameter than a section of the tie rod in its middle region.

A one-piece rod can be easier to install and maintain compared to multi-piece assemblies. The straight profile can minimize stress concentrations, leading to better durability and longevity.

One or more stopping arrangements may be provided to the tie rod. The tie rod may be provided with two stopping arrangements, for example axial stoppers, at one or both of its ends. A first stopper arrangement may be provided to the tie rod. The first stopper arrangement may be arranged at a first distal end of the tie rod. The first stopper arrangement may be configured to prevent a movement of the first output shaft relative to the tie rod in a first axial direction. A second stopper arrangement may be provided to the tie rod. The second stopper arrangement may be arranged at a second distal end of the tie rod. The second stopper arrangement may be configured to prevent a movement of the second output shaft relative to the tie rod in a second axial direction. The first and second axial directions may be opposite directions.

The stopper arrangements provided at either or both ends of the tie rod can aid to retain the respective output shafts to the tie rod, preventing their axial movement with respect to the tie rod and thus ensuring alignment and retainment of the output shafts. By securely locking output shafts in both axial directions, the assembly can reduce wear and tear on the components, leading to increased durability and longevity.

The first stopper arrangement may be received in a cavity of the first output shaft. The first stopper arrangement may be received in a distal end cavity of the first output shaft. The distal end cavity of the first output shaft may be larger in diameter than the first central bore. The second stopper arrangement may be received in a cavity of the second output shaft. The second stopper arrangement may be received in a distal end cavity of the second output shaft. The distal end cavity of the second output shaft may be larger in diameter than the second central bore.

Cavities provided at the distal portions of the output shafts can provide sufficient space to arrange the stopper arrangements. This can help to prevent the stopper arrangements from interfering with other components. The design can allow for easy insertion of the stopper arrangements into the cavities, simplifying the assembly process. This can reduce the time and effort required for installation and maintenance.

The first stopper arrangement may be configured to stop an axial movement of the tie rod against the first output shaft. The first stopper arrangement may be configured to stop an axial movement of the tie rod against an axially facing feature of the distal end cavity of the first output shaft. The second stopper arrangement may be configured to stop an axial movement of the tie rod against the second output shaft. The second stopper arrangement may be configured to stop an axial movement of the tie rod against an axially facing feature of the distal end cavity of the second output shaft. The axially facing feature of the distal end cavity of the first output shaft and/or of the second output shaft may be orthogonal to the long axis of the tie rod. The axially facing feature of the distal end cavity of the first output shaft and/or of the second output shaft may be a bottom wall, optionally extending from the corresponding central bore radially outward.

The stopper arrangement can advantageously prevent the tie rod from moving axially (along its length) by coming into contact with the axially facing feature of the distal cavity in the output shaft. The axially facing feature can act as a physical barrier that stops the tie rod from moving further in that direction, helping to ensure that it remains securely in place.

The first stopper arrangement may be arranged coaxially with the tie rod. The first stopper arrangement may be arranged coaxially with and/or at a first distal end of the tie rod. The second stopper arrangement may be arranged coaxially with the tie rod. The second stopper arrangement may be arranged coaxially with and/or at a second distal end of the tie rod.

Coaxial stopper arrangements can facilitate precise alignment of the output shafts with the tie rod. This alignment can aid the smooth operation of the differential, reducing the risk of mechanical issues and enhancing overall performance. Coaxial stopper arrangements can simplify the assembly process. The straightforward design can allow for easy insertion and positioning of the stopper arrangements, reducing the time and effort required for installation. Coaxial positioning of the stopper arrangements can help in evenly distributing the forces exerted on the output shafts. This improved load distribution can reduce stress concentrations, enhancing the durability of the shafts.

One or more of the stopper arrangements may comprise a spacer. The spacer may comprise at least a flange portion, optionally to retain the corresponding output shaft in position. One or more of the first stopper arrangement and the second stopper arrangement can comprise a spacer. The spacer can comprise at least a flange portion configured to extend radially within the distal end cavity of the corresponding output shaft. A mounting portion may be disposed within the flange portion. The mounding portion may surround the corresponding distal end of the tie rod.

A spacer used here can advantageously axially adjust a distance between the stoppers provided to the tie rod. This can help to secure the tie rod in place and to maintain proper alignment, preventing axial movement that could lead to reduced performance. The flange portion of the spacer, for example extending radially within the distal end cavity of the output shafts, can help to distribute the load more evenly. This optimized load distribution can reduce stress concentrations, enhancing the durability of the output shafts.

At least one spacer may be secured to the tie rod with a fastening element such as a nut.

Securing the spacer to the tie rod with a fastening element such as a nut can help keep the spacer firmly in place. This can enhance the overall stability of the output shaft assembly, reducing the risk of axial movement and misalignment.

One or more of the first stopper arrangement and the second stopper arrangement may comprise a bearing arrangement arranged between the spacer and the corresponding output shaft. The bearing arrangement may be arranged between the spacer and the axially facing feature of the distal end cavity of the corresponding output shaft. The bearing arrangement may comprise at least a friction bearing, and/or rolling elements such as a ball bearing or a needle bearing.

The bearing arrangement can advantageously act as an axial stop. The bearing arrangement can allow relative rotation between the spacer and the output shaft, minimizing friction. This reduction in friction can lead to smoother operation and less wear and tear on the components, extending their service life.

One of the first stopper arrangement and the second stopper arrangement may comprise an adjustment shim. The adjustment shim may be arranged axially between the spacer and the tie rod. The adjustment shim may be arranged axially between the spacer and a shoulder of the tie rod.

The adjustment shim can allow adjustment to provide sufficient clearance to prevent excess pre-loading of needle bearings when retaining elements of the assembly, such as nuts, are tightened. This can facilitate smooth operation of the bearings, without excessive pressure, reducing wear and extending their lifespan. The adjustment shim can compensate for tolerance stackups in the assembly. This can help in achieving precise alignment and fit, ensuring that all components work together seamlessly without gaps or misalignment.

A remaining space in the distal end cavity of one or more of the first output shaft and the second output shaft may be at least partially filled with grease and optionally sealed with a cap.

Providing at least some of the remaining space of the distal end cavity with grease can facilitate continuous lubrication of the output shafts. This can reduce friction and wear, leading to smoother operation and extended lifespan of the components. Providing one or more mounting caps to seal one or more of the cavities can help retain the grease within the cavity or cavities. This can prevent leakage and contamination, maintaining optimal lubrication conditions and protecting the internal components from contamination, dirt and/or debris.

In one aspect a differential case assembly for a differential carrier housing may be provided. The differential carrier housing may be a part of an axle assembly. The differential carrier housing may be configured to be mounted to an axle housing of the axle assembly. The differential case assembly may comprise a differential case. The differential case may house a differential gear arrangement. The differential case assembly may comprise the output shaft assembly described in the preceding passages. The differential case assembly may comprise a differential gear arrangement. The differential gear arrangement may be configured to transfer power to the first output shaft and the second output shaft of the output shaft assembly.

All features, definitions and advantages described above in relation to the output shaft assembly may apply also to the differential case assembly comprising the output shaft assembly.

The tie rod of the output shaft assembly may be configured to extend along a central axis of the differential case assembly. The tie rod of the output shaft assembly may be configured to extend through a central space of the differential case assembly separating the first and second output shafts. The central space may be the area within the differential case assembly for housing the differential gear arrangement.

The central positioning of the tie rod can provide balanced support to the output shafts, reducing the risk of axial movement and misalignment. This stability can lead to more reliable and consistent operation of the differential.

The first output shaft may comprise a flange portion disposed around its distal end cavity to locate the first output shaft axially against the differential case. The second output shaft may comprise a flange portion around its distal end cavity to locate the second output shaft axially against the differential case.

The flange portion around the distal end cavity of the output shafts can act as a secondary stopper, providing additional axial retention. This can help to ensure that the output shafts are securely held in place against the differential case, reducing the risk of axial movement and misalignment.

A first washer may be arranged axially between the flange portion of the first output shaft and the differential case. A first washer may be arranged axially between the flange portion of the first output shaft and a first distal end of the differential case. A second washer may be arranged axially between the flange portion of the second output shaft and the differential case. A second washer may be arranged axially between the flange portion of the second output shaft and a second distal end of the differential case. The first and/or second washer may be a brass washer.

One or more of the first and second washers can help to bear the axial force coming from a cardan shaft or axle shaft. The washer can bear the relative rotation between output shafts the differential case.

A tie rod may be used to retain a first output shaft and a second output shaft together within a differential case assembly, wherein the tie rod is configured to extend along a central bore of the first output shaft and the second output shaft.

Within the scope of this application, it is expressly intended that the various aspects, examples, examples and alternatives set out in the preceding paragraphs, in the claims and/or in the following description and drawings, and, in particular, the individual features thereof, may be taken independently or in any combination. All examples and/or features of any example or example can be combined in any way and/or combination unless such features are incompatible. The applicant reserves the right to change any originally filed claim or file any new claim accordingly, including the right to amend any originally filed claim to depend from and/or incorporate any feature of any other claim, although not originally claimed in that manner.

Further benefits and advantages of the present disclosure will become apparent from the following detailed description of at least one example for carrying out the present disclosure with reference to the accompanying drawings.

### Brief Description of Drawings

One or more examples of the disclosure will now be described, by way of example only, with reference to the accompanying drawings, in which:
Figure 1 is a sectional view of an example of an axle assembly with a differential carrier housing according to an example of the disclosure;
Figure 2 is a cross-sectional top view of an example of an output shaft assembly received in a differential case assembly carried by the differential carrier housing according to an example of the disclosure;
Figure 3 is a cross-sectional top view of an example of an output shaft of the output shaft assembly illustrated in Figure 2;
Figure 4 is a perspective view of an example of an output shaft of the output shaft assembly illustrated in Figure 2;
Figure 5 is a perspective view of an example of an output shaft of the output shaft assembly illustrated in Figure 2.

### Detailed Description

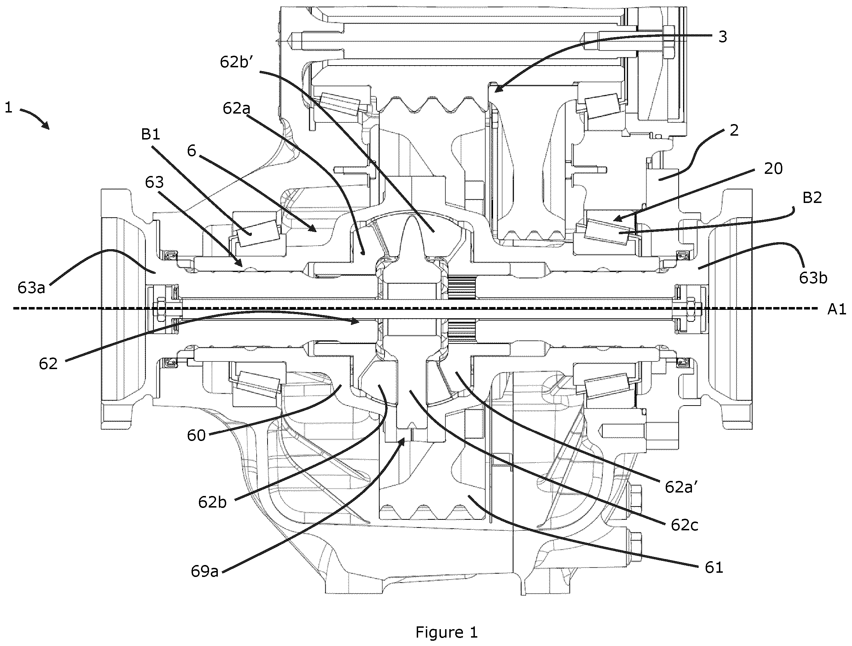

With reference to Figure 1, an example of an axle assembly 1 is shown. The axle assembly 1 can be provided on or for a motor vehicle of any suitable type, such as a truck, bus, farm equipment, mining equipment, transport or utility vehicle, or cargo loading equipment for land, air, or marine vessels having at least one axle. The motor vehicle can be or can include a trailer for transporting cargo.

The axle assembly 1 can be a part of a vehicle drivetrain that provides torque to one or more traction wheel assemblies that includes a tire mounted on a wheel. One or more axle assemblies 1 can be provided to the vehicle. For example, the axle assembly 1 can be a single drive axle assembly or may be configured as part of a tandem axle configuration or multi-axle configuration that may include a plurality of axle assemblies connected in series. An axle assembly 1 that is operatively connected to at least one torque source, such as an electric motor or an internal combustion engine, can be referred to as a first axle assembly. An axle assembly that receives propulsion torque from the torque source via the first axle assembly can be referred to as a second axle assembly. In FIG. 1, the axle assembly 1 is depicted as being a first axle assembly.

The axle assembly 1 can provide torque to its associated wheel assemblies and may further provide torque to the second axle assembly. The axle assembly 1 can include a differential carrier housing 2, configured to house the differential case assembly 6.

The axle assembly 1 can include axle shafts, such as cardan shafts, connected to first and second output shafts 63a, 63b.

The axle assembly 1 can include a drive gear assembly 3. The drive gear assembly 3 can be received by the differential carrier housing 2 when in an assembled state. The drive gear assembly 3 can be arranged to be coupled to a torque source, such as an electric motor, engine or other power source, to transfer torque to the differential gear arrangement 62.

The axle assembly 1 can include a differential case assembly 6. The differential case assembly 6 can be supported by the differential carrier housing 2. The differential carrier housing 2 can include a cavity portion 20 at least partially receiving the differential case assembly 6.

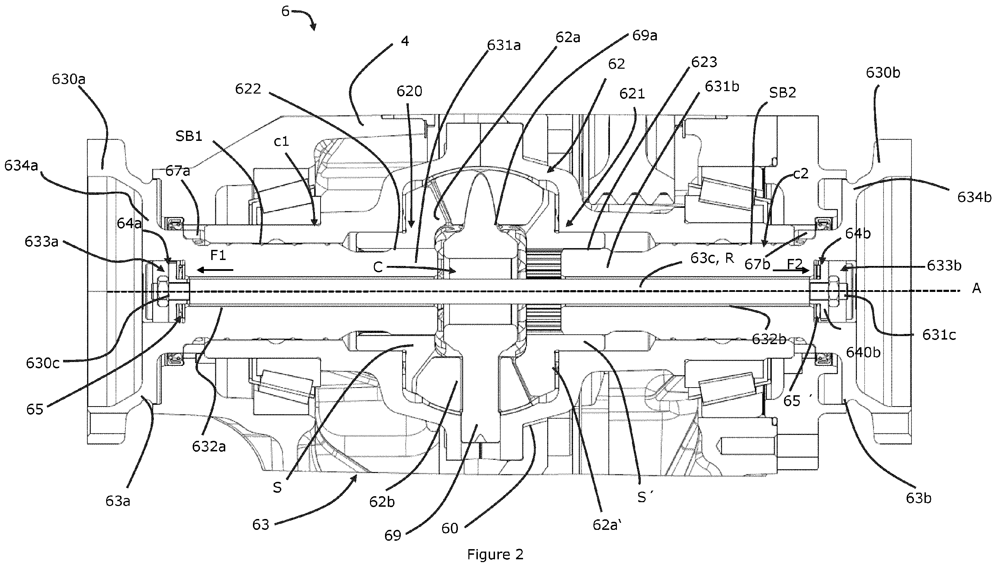

The differential case assembly 6 can include a differential case 60, an input gear 61, a differential gear arrangement 62 and an output shaft assembly 63. Examples of an output shaft assembly will be explained in this document in further detail with respect to Figures 2-5.

The differential case 60 can be arranged to house the differential gear arrangement 62. The differential gear arrangement 62 can include at least side gears 62a, 62a' and one or more pinion gears 62b, 62b'. The rotation of the pinion gears 62b, 62b' between the side gears 62a, 62a' can allow the output shafts 63a, 63b, which can drive wheels of a vehicle in which the illustrated arrangement is provided, to allow wheels on different sides of the vehicle to rotate at different speeds while being driven by the differential gear arrangement 62 in a standard manner for a differential arrangement. The pinion gears 62b, 62b' may be supported by a pinion shaft 62c and/or a carrier assembly 69, 69a, which supports the pinion gears 62b, 62b' in rotation within the differential case 60 and allows them to rotate between the side gears 62a, 62a'.

The input gear 61 can have teeth that mate or mesh with the teeth of a gear portion of the drive gear assembly 3. The differential gear arrangement 62 can receive torque from a drive pinion or the drive gear assembly 3 via the input gear 61 and transmit torque to the axle shafts via the output shaft assembly 63. The input gear 61 can be fixedly mounted to the differential case 60 of the differential case assembly 6. The differential gear arrangement 62 of the differential case 60 can be operatively connected to axle shafts or directly to wheel ends via cardan shafts. The axle shafts or cardan shafts can transmit torque from the differential case assembly 6 to corresponding wheel hubs and wheels. Axle shafts can extend along and be rotatable about an axis A1. Each axle shaft can have a first end and a second end. The first end can be operatively connected to an end of the output shaft assembly 63 of the differential case assembly 6. The second end can be disposed opposite the first end and may be operatively connected to a wheel. The axle shafts may be cardan shafts.

The differential case 60 can be rotatably supported by at least one bearing assembly. In the configuration shown in Figure 1, a first bearing assembly B1 and a second bearing assembly B2 are provided to rotatably support the differential case 60 with respect to the differential carrier housing 2. One or more of the first bearing assembly B1 and the second bearing assembly B2 may comprise a roller bearing assembly. The differential case assembly 6 can be rotatable about the axis A1 with respect to the differential carrier housing 2.

The differential case assembly 6 can transfer power to the axle shafts and wheels (not shown). The differential gear arrangement 62 of the differential case assembly 6 can permit the axle shafts to rotate at different rotational speeds in a manner known by those skilled in the art. The differential gear arrangement 62 can be connected to the axle shafts via the output shaft assembly 63, an example of which will be further illustrated in Figures 2-5.

With reference to Figure 2, an example of an output shaft assembly 63, is shown.

The differential gear arrangement 62 can be configured to transfer power to the output shaft assembly 63. The output shaft assembly 63 can comprise a first output shaft 63a and a second output shaft 63b as illustrated in Figure 2. The first output shaft 63a and the second output shaft 63b, as illustrated in Figure 2, can have the same shape, and may be symmetrical. The first output shaft 63a can be arranged in a first portion c1 of the differential case 60 and the second output shaft 63b can be arranged in a second portion c2 of the differential case 60, as illustrated in Figure 2. The differential case 60 can comprise a central space C. The central space C can partly house the differential gear arrangement 62. The first portion c1 of the differential case 60 and the second portion c2 of the differential case 60 can be separated by the central space C. The central space C can separate the first and second output shafts 63a, 63b.

A bearing can be provided between the differential case 60 and one or more of the output shafts. The bearing can be a sliding bearing SB, for example a plain bearing or journal bearing. A first sliding bearing SB1 can be provided between the first output shaft 63a and the differential case 60. A second sliding bearing SB2 can be provided between the second output shaft 63b and the differential case 60.

The first output shaft 63a can be configured to output power from a first output side 620 of the differential gear arrangement 62. The second output shaft 63b can be configured to output power from a second output side 621 of the differential gear arrangement 62. One or more connection interfaces 622, 623 may be provided between the differential gear arrangement 62 and the first 63a and/or second 63b output shafts. The connection interface 622, 623 can be configured to transfer torque between the differential gear arrangement 62 and a respective output shaft 63a, 63b. The connection interface may comprise a translatable interface permitting the output shaft or shafts 63a, 63b to translate axially. The connection interface 622, 623 may comprise a toothed interface, such as a gear, spline or dog clutch arrangement. The connection interface 622, 623 may be configured to transmit of torque between the differential gear arrangement 62 and one or more of output shafts 63a and 63b. The connection interface(s) 622, 623 may be configured to allow axial translation of one or more of output shafts 62a, 62b relative to the differential gear arrangement 62. The connection interface(s) 622, 623 may be configured to allow disengagement, which may be in an axial direction, of one or more of output shafts 62a, 62b from the differential gear arrangement 62. The first output shaft 63a may engage the differential gear arrangement 62 via a first connection interface 622. The second output shaft 63b may engage the differential gear arrangement 62 via a second connection interface 623.

The output shaft assembly 63 can comprise a connector connecting the first output shaft 63a with the second output shaft 63b. The connector can retain the first output shaft 63a and the second output shaft 63b together in the differential gear arrangement 62.

In one example, the first output shaft 63a and the second output shaft 63b may be connected by a tie rod 63c, as illustrated in Figure 2. The tie rod 63c can retain the first output shaft 63a and the second output shaft 63b together in the differential gear arrangement 62. More specifically, the tie rod 63c can retain the first output shaft 63a and the second output shaft 63b together in the differential case 60.

The tie rod 63c can have a straight profile. The tie rod 63c can have a straight profile through its middle region. The tie rod 63c can be a one-piece rod R as illustrated in Figure 2. The tie rod 63c can be made of two separate pieces, which are connected to each other, for example mechanically. The tie rod 63c can have the same diameter along its entire length axially. The tie rod 63c can have distal ends, at which the diameter is smaller than the diameter of a central region of the tie rod 63c. At least a central region of the tie rod 63c may have a straight profile.

The first output shaft 63a can comprises a distal end 630a and a proximal end 631a. The distal end 630a of the first output shaft 63a can be connected to a first axle shaft or to a first cardan shaft. The proximal end 631a of the first output shaft 63a can be connected to the first output side 620 of the differential gear arrangement 62, as illustrated in Figure 2. The proximal end 631a of the first output shaft 63a can be connected to an output shaft portion S of the differential gear arrangement 62, for example via connection interface 622. The proximal end 631a of the first output shaft 63a can be connected to one of the side gears 62a of the differential gear arrangement 62, for example with a threaded connection. The output shaft portion S may be a part of the said side gear 62a.

The second output shaft 63b can comprises a distal end 630b and a proximal end 631b. The distal end 630b of the second output shaft 63b can be connected to a second axle shaft or to a second cardan shaft. The proximal end 631b of the first output shaft 63b can be connected to the second output side 621 of the differential gear arrangement 62. The proximal end 631b of the second output shaft 63b can be connected to an output shaft portion S' of the differential gear arrangement 62, for example via connection interface 623. The proximal end 631b of the second output shaft 63b can be connected to one of the side gears 62a' of the differential gear arrangement 62, for example with a threaded connection. The output shaft portion S' may be a part of the said side gear 62a'.

The first output shaft 63a can comprise a cavity to receive at least a portion of the tie rod 63c (a first portion of the tie rod 63c). In one example, the first output shaft 63a can comprise a first central bore 632a, as illustrated in Figure 2. At least a portion of the tie rod 63c can be received in the first central bore 632a in the assembled state. At least a portion of the tie rod 63c can extend through the first central bore 632a as illustrated in Figure 2.

The second output shaft 63b can comprise a cavity arranged to receive at least a portion of the tie rod 63c (a second portion of the tie rod 63c), e.g. the opposite portion of the tie rod 63c which is received by the first output shaft 63a in the assembled state. In one example, the second output shaft 63b can comprise a second central bore 632b, as illustrated in Figure 2. At least a portion of the tie rod 63c can be received in the second central bore 632b in the assembled state. At least a portion of the tie rod 63c can extend through the second central bore 632b as illustrated in Figure 2.

The differential case 60 can have a central axis A. The tie rod 63c can be configured to extend along the central axis A of the differential case 60 in the assembled state. The tie rod 63c can be configured to extend through the first central bore 632a and the second central bore 632b in the assembled state. The tie rod 63c can be configured to extend through the first central bore 632a and the second central bore 632b, and through the central space C of the differential case 60 in the assembled state.

The tie rod 63c can comprise a first distal end 630c. The tie rod 63c can comprise a second distal end 631c. The first distal end 630c and the second distal end 631c can be positioned on opposite sides of the tie rod 63c.

The first output shaft 63a can comprise a cavity. A first end of the tie rod may be received in the cavity in an assembled state. This cavity can be a distal end cavity 633a of the first output shaft 63a, as illustrated in Figure 2. The first distal end 630c of the tie rod 63c can be received in the distal end cavity 633a of the first output shaft 63a in the assembled state. The tie rod 63c can be provided with a stopper arrangement or an end stop arrangement. The stopper arrangement can be arranged coaxially with the distal end of the tie rod. The stopper arrangement can be a first stopper arrangement 64a. The first stopper arrangement 64a (stopper arrangement or an end stop arrangement) can be received in the cavity, e.g. in the distal end cavity 633a of the first output shaft 63a as illustrated in Figure 2. The first distal end 630c of the tie rod 63c can be provided with this first stopper arrangement 64a illustrated in Figure 2. The first stopper arrangement 64a can be arranged coaxially with the first distal end 630c of the tie rod 63c. The first stopper arrangement 64a, or end stop arrangement, can be configured to prevent a movement of the first output shaft 63a relative to the tie rod 63c. The first stopper arrangement 64a, or end stop arrangement, can be configured to prevent a movement of the first output shaft 63a relative to the tie rod 63c in a first axial direction F1. The first stopper arrangement 64a, or end stop arrangement, can be configured to prevent a movement of the tie rod 63c relative to the first output shaft 63a. The first stopper arrangement 64a, or end stop arrangement, can be configured to prevent a movement of the tie rod 63c relative to the first output shaft 63a in an opposite direction of the first axial direction F1.

The second output shaft 63b can comprise a cavity. A second end of the tie rod may be received in this cavity in an assembled state. This cavity can be a distal end cavity 633b of the second output shaft 63b, as illustrated in Figure 2. The second distal end 631c of the tie rod 63c can be received in the distal end cavity 633b in the assembled state. The tie rod 63c can be provided with a further stopper arrangement or a further end stop arrangement. The stopper arrangement can be arranged coaxially with the distal end of the tie rod. The further stopper arrangement can be called as a second stopper arrangement 64b. The second stopper arrangement 64b (the further stopper arrangement or the further end stop arrangement) can be received in the cavity, e.g. in the distal end cavity 633b of the second output shaft 63b as illustrated in Figure 2. A second distal end 631c of the tie rod 63c can be provided with this second stopper arrangement 64a illustrated in Figure 2. The second stopper arrangement 64b is arranged coaxially with the second distal end 631c of the tie rod 63c.

The second stopper arrangement 64b, or end stop arrangement, can be configured to prevent a movement of the second output shaft 63b relative to the tie rod 63c. The second stopper arrangement 64b, or end stop arrangement, can be configured to prevent a movement of the second output shaft 63b relative to the tie rod 63c in a second axial direction F2. The second stopper arrangement 64b, or end stop arrangement, can be configured to prevent a movement of the tie rod 63c relative to the second output shaft 63b. The second stopper arrangement 64b, or end stop arrangement, can be configured to prevent a movement of the tie rod 63c relative to the second output shaft 63b in an opposite direction of the second axial direction F2.

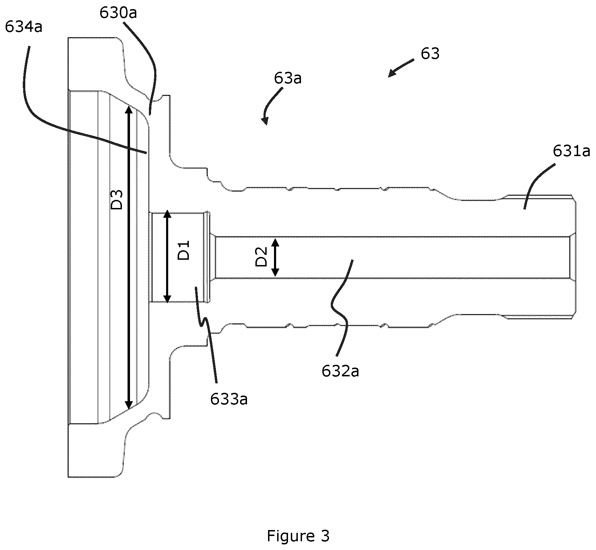

With reference to Figure 3, an example of an output shaft of the output shaft assembly 63 is shown. The illustrated output shaft could represent the first output shaft 63a, which is described above. Both the first output shaft 63a and the second output shaft 63b may have substantially the same features. Thus, all features illustrated in Figure 3 can apply to either or both output shafts.

The distal end cavity 633a of the first output shaft 63a can have a diameter D1. The inner wall of the cavity may be smooth or feature specific textures or grooves to enhance the fit and function of the inserted component. Additionally, the cavity may include features such as chamfers or fillets to facilitate easier insertion and reduce stress concentrations. The cavity may also be coated with a wear-resistant material to increase durability and reduce friction. Furthermore, the cavity could incorporate sealing elements to prevent contamination and provide a secure fit.

The first central bore 632a of the first output shaft 63a can have a diameter D2. As illustrated in Figure 3, the diameter D1 of the distal end cavity 633a of the first output shaft 63a can be greater than the diameter D2 of the first central bore 632a of the first output shaft 63a. Similarly, a diameter D1' of the distal end cavity 633b of the second output shaft 63b can be greater than a diameter D2' of the second central bore 632b of the second output shaft 63b.

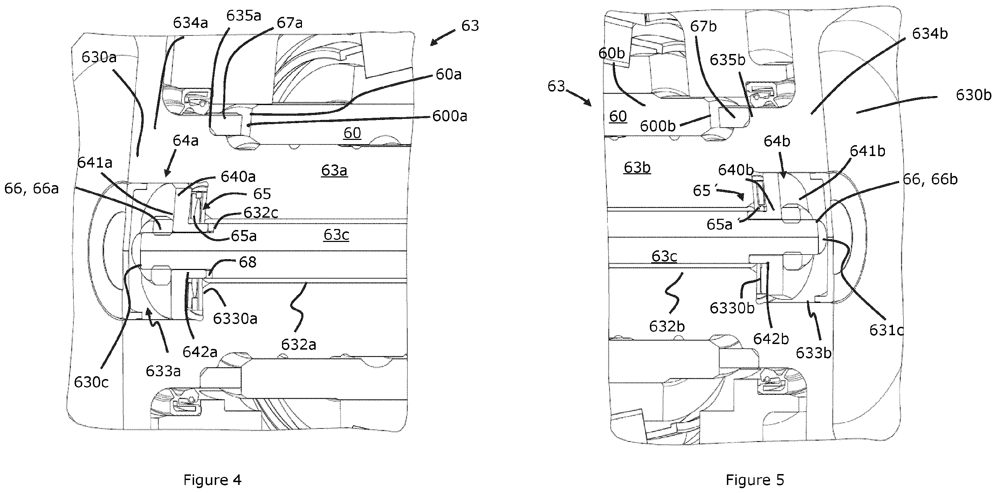

With reference to Figure 4, an example of an output shaft of the output shaft assembly 63 is shown. The illustrated output shaft could represent the first output shaft 63a.

The stopper arrangement or the end stop arrangement can comprise a flange portion. The flange portion can be a part of the spacer of the stopper arrangement, or the end stop arrangement. The spacer can be a single-piece unit. The flange portion can be configured to extend radially within the distal end cavity of the corresponding output shaft. The first stopper arrangement 64a can comprise a flange portion 640a as illustrated in Figure 4. The flange portion 640a can be a part of a spacer 641a, as illustrated in Figure 4. The flange portion 640a can be configured to extend radially within the distal end cavity 633a of the first output shaft 63a. The stopper arrangement or the end stop arrangement can be configured to stop an axial movement of the tie rod 63c against an axially facing feature of the distal end cavity of the corresponding output shaft. The first stopper arrangement 64a can be configured to stop an axial movement of the tie rod 63c against an axially facing feature 6330a of the distal end cavity 633a of the first output shaft 63a as illustrated in Figure 4. The axially facing feature 6330a can be a bottom wall of the distal end cavity 633a of the first output shaft 63a, as illustrated in Figure 4 (as can be seen also in Figure 2). The bottom wall can have a central opening in axial alignment with the first central bore 632a of the first output shaft 63a. The central opening can be configured to receive the first output shaft 63a, e.g. the first distal end 630c of the tie rod 63c.

With reference to Figure 5, an example of an output shaft of the output shaft assembly 63 is shown. The illustrated output shaft could represent the second output shaft 63b.

The further stopper arrangement or the further end stop arrangement can comprise a flange portion. The flange portion can be a part of the spacer of the stopper arrangement, or of the end stop arrangement. The flange portion can be configured to extend radially within the distal end cavity of the corresponding output shaft. The second stopper arrangement 64b can comprise a flange portion 640b as illustrated in Figure 5. The flange portion 640b can be a part of a spacer 641b, as illustrated in Figure 5. The flange portion 640b can be configured to extend radially within the distal end cavity 633b of the second output shaft 63b. The stopper arrangement or the end stop arrangement can be configured to stop an axial movement of the tie rod 63c against an axially facing feature of the distal end cavity of the corresponding output shaft. The second stopper arrangement 64b can be configured to stop an axial movement of the tie rod 63c against an axially facing feature 6330b of the distal end cavity 633b of the second output shaft 63b as illustrated in Figure 5. The axially facing feature 6330b can be a bottom wall of the distal end cavity 633b of the second output shaft 63b, as illustrated in Figure 5 (as can be seen also in Figure 2). The bottom wall can have a central opening in axial alignment with the second central bore 632b of the second output shaft 63b. The central opening can be configured to receive the second output shaft 63b, e.g. the second distal end 631c of the tie rod 63c.

One or more of the stopper arrangements or the end stop arrangements can comprise a mounting portion. The mounting portion can surround the corresponding distal end 630c, 631c of the tie rod 63c. The mounting portion can be a part of the corresponding spacer 641a, 641b. The mounting portion can be disposed within the flange portion 640a, 640b. The flange portion 640a, 640b can extend radially outwards from the mounting portion. For example, as illustrated in Figure 4 the first stopper arrangement 64a comprises a mounting portion 642a. The mounting portion 642a surrounds the first distal end 630c of the tie rod 63c. The mounting portion 642a and the flange portion 640a can be parts of a one-piece spacer. For example, as illustrated in Figure 5 the second stopper arrangement 64b comprises a mounting portion 642b. The mounting portion 642b surrounds the second distal end 631c of the tie rod 63c. The mounting portion 642b and the flange portion 640b can be parts of a one-piece spacer.

The said spacer can be secured to the tie rod with a fastening element 66 or a retention device, examples including nuts, clamps, pins, set screws, and circlips or snap rings. In one example, the spacer 641a of the first stopper arrangement 64a can be secured to the tie rod 63c with a nut 66a, as illustrated in Figure 4. In one example, the spacer 641b of the second stopper arrangement 64b can be secured to the tie rod 63c with a nut 66b, as illustrated in Figure 5.

One or more of the stopper arrangements or the end stop arrangements can comprise a bearing arrangement 65, 65'. The bearing arrangement 65, 65' can be arranged between a portion of the corresponding stopper arrangement (or the corresponding end stop arrangements) and a portion of the corresponding output shaft. The bearing arrangement 65, 65' can be arranged between the spacer or the flange portion of the spacer of the corresponding stopper arrangement and a radially extending and/or axially facing feature of the first output shaft.

The bearing arrangement 65 can be arranged between the spacer 641a of the first stopper arrangement 64a and the axially facing feature 6330a (e.g. a bottom wall of the distal end cavity being orthogonal to the axis of the tie rod) of the distal end cavity 633a of the corresponding output shaft 63a as illustrated in Figure 4. The bearing arrangement 65 can be arranged between the flange portion 640a of the first stopper arrangement 64a and a radially extending and/or axially facing feature 6330a of the distal end cavity 633a of the first output shaft 63a.

The bearing arrangement 65' can be arranged between the spacer 641b of the second stopper arrangement 64b and the axially facing feature 6330b (e.g. a bottom wall of the distal end cavity being orthogonal to the axis of the tie rod) of the distal end cavity 633b of the corresponding output shaft 63b as illustrated in Figure 5. The bearing arrangement 65' can be arranged between the flange portion 640b of the first stopper arrangement 64b and a radially extending and/or axially facing feature 6330b of the distal end cavity 633b of the second output shaft 63b.

The bearing arrangement 65, 65' may comprise a friction reducing material, such as PTFE or a low friction metal such as brass. As such, a bearing of the bearing arrangement 65, 65' may be a friction bearing. The bearing arrangement 65, 65' may include roller elements, such as ball bearings or needle rollers, and may in one example be a needle bearing 65a, 65a', such as is illustrated in Figures 4 and 5. The needle bearings 65a, 65 can be provided with rolling tracks.

One of the first stopper arrangement 64a and the second stopper arrangement 64b can comprise an adjustment shim 67. In one example, the adjustment shim 68 can be arranged axially between the spacer 641a of the first stopper arrangement 64a and a shoulder of the tie rod 632c as illustrated in Figure 4.

One or more of the first output shaft 63a and the second output shaft 63b can comprise a flange portion. The flange portion can be arranged at the distal end of the corresponding output shaft. The flange portion can have a larger diameter than the diameter of the distal end cavity. The flange portion can surround the distal end cavity of the corresponding output shaft. The flange portion can be configured to connect to an axle shaft or cardan shaft. The flange portion can be utilized to stop the corresponding output shaft axially against the differential case. An outer section of the flange portion can be configured to connect to an axle shaft or cardan shaft. An axial stopper (e.g. a washer or a brass washer) can be arranged axially between the flange portion of the corresponding output shaft and the differential case. The flange portion can comprise a step wall facing the differential case axially. The axial stopper can be arranged between the step wall and the differential case. Referring to Figure 2, 3 and 4, an example of a flange portion 634a of the first output shaft 63a is shown. The flange portion 634a can have a diameter D3, which is larger than the diameter D1 of the distal end cavity 633a. The flange portion 634a can circumference (encircle or surround) its distal end cavity 633a. The flange portion 634a can extend radially outward from the outer edge of the cavity 633a at its far end. The flange portion 634a around its distal end cavity 633a can be used to stop the first output shaft 63a axially against the differential case 60. Similarly, the second output shaft 63b can comprise a flange portion 634b as shown in Figures 2, 3 and 4. The flange portion 634b can circumference (encircle or surround) its distal end cavity 633b. The flange portion 634b can have a diameter D3', which is larger than the diameter D1' of the distal end cavity 633b. The flange portion 634b can extend radially outward from the outer edge of the cavity 633b at its far end. The flange portion 634b around its distal end cavity 633b can be used to stop the second output shaft 63b axially against the differential case 60.

An example of an axial stopper can be a first washer 67a that is arranged axially between the flange portion 634a of the first output shaft 63a and the differential case 60 as illustrated in Figure 4. The first washer 67a can be arranged axially between a step wall 635a of the flange portion 634a of the first output shaft 63a and the first distal end 60a of the differential case 60 as illustrated in Figure 4. The first washer 67a can be arranged axially between the step wall 635a the flange portion 634a of the first output shaft 63a and an outer edge wall 600a at the first distal end 60a of the differential case 60 as illustrated in Figure 4.

An example of an axial stopper can be a second washer 67b that is arranged axially between the flange portion 634b of the second output shaft 63b and the differential case 60 as illustrated in Figure 5. The second washer 67b can be arranged axially between a step wall 635b of the flange portion 634b of the second output shaft 63b and the second distal end 60b of the differential case 60 as illustrated in Figure 5. The second washer 67b can be arranged axially between the step wall 635b the flange portion 634b of the second output shaft 63b and an outer edge wall 600b at the second distal end 60b of the differential case 60 as illustrated in Figure 5.

Where the word 'or' appears, this is to be construed to mean 'and/or'. This is such that items referred to are not necessarily mutually exclusive and may be used in any appropriate combination.

The disclosure has been described above with reference to one or more specific examples. However, the description is not exhaustive, and the present disclosure is not limited to the examples described. Various changes and modifications can be made without departing from the scope of the invention as defined in the claims. The skilled reader will appreciate that the components illustrated in combination in the Figures can be combined as shown, but many are not essential to realising the various benefits of the disclosure described and so may be omitted whilst still producing the benefits described.

**Reference sign list:**

| | |
|---|---|
| axle assembly | 1 |
| differential carrier housing | 2 |
| cavity portion | 20 |
| drive gear assembly | 3 |
| differential case assembly | 6 |
| axis | A1 |
| differential case | 60 |
| first bearing assembly | B1 |
| second bearing assembly | B2 |
| first portion of the differential case | c1 |
| second portion of the differential case | c2 |
| central space of the differential case | C |
| sliding bearing | SB |
| first sliding bearing | SB1 |
| second sliding bearing | SB2 |
| central axis of the differential case | A |
| first distal end of the differential case | 60a |
| outer edge wall at the first distal end | 600a |
| second distal end of the differential case | 60b |
| outer edge wall at the second distal end | 600b |
| input gear | 61 |
| differential gear arrangement | 62 |
| side gear | 62a, 62a' |
| pinion gear | 62b, 62b' |
| pinion shaft | 62c |
| first output side | 620 |
| second output side | 621 |
| first connection interface | 622 |
| second connection interface | 623 |
| output shaft portion | S, S' |
| output shaft assembly | 63 |
| first output shaft | 63a |
| distal end of the first output shaft | 630a |
| proximal end of the first output shaft | 631a |
| first central bore | 632a |
| distal end cavity the first output shaft | 633a |
| axially facing feature of the distal end cavity | 6330a |
| flange portion of the first output shaft | 634a |
| step wall of the flange portion | 635a |
| Diameter of the distal end cavity | D1 |
| Diameter of the first central bore | D2 |
| Diameter of the flange portion | D3 |
| second output shaft | 63b |
| distal end of the second output shaft | 630b |
| proximal end of the second output shaft | 631b |
| second central bore | 632b |
| distal end cavity of the second output shaft | 633b |
| axially facing feature of the distal end cavity | 6330b |
| flange portion of the second output shaft | 634b |
| step wall of the flange portion | 635b |
| Diameter of the distal end cavity | D1' |
| Diameter of the second central bore | D2' |
| Diameter of the flange portion | D3' |
| tie rod | 63c |
| first distal end of the tie rod | 630c |
| second distal end of the tie rod | 631c |
| shoulder of the tie rod | 632c |
| first stopper arrangement | 64a |
| second stopper arrangement | 64b |
| flange portion | 640a, 640b |
| spacer | 641a, 641b |
| mounting portion | 642a, 642b |
| bearing arrangement | 65, 65' |
| needle bearing | 65a, 65a' |
| fastening element | 66 |
| nut | 66a, 66b |
| first washer | 67a |
| second washer | 67b |
| adjustment shim | 68 |
| carrier assembly | 69, 69a |
| one-piece rod | R |
| drive pinion | 7 |
| drive pinion gear | 70 |
| first axial direction | F1 |
| second axial direction | F2 |

## Claims

1. An output shaft assembly (63), for a differential case assembly (6) comprising a differential gear arrangement (62) configured to transfer power to the output shaft of the output shaft assembly (6), the output shaft assembly (63) comprising:
a first output shaft (63a) configured to output power from a first output side (620) of the differential gear arrangement (62);
a second output shaft (63b) configured to output power from a second output side (621) of the differential gear arrangement 62; and
a tie rod (63c) configured to connect the first output shaft (63a) with the second output shaft (63b) to retain them in the differential gear arrangement (62).

2. The output shaft assembly according to claim 1, wherein the first output shaft (63a) comprises a first central bore (632a), wherein the second output shaft (63b) comprises a second central bore (632b), wherein the tie rod (63c) is configured to extend through at least one of the first central bore (632a) and the second central bore (632b).

3. The output shaft assembly according to claim 1 or 2, wherein the tie rod (63c) is a one-piece rod (R), optionally with a straight profile.

4. The output shaft assembly according to any one of claims 1 to 3, wherein a first stopper arrangement (64a) is arranged at a first distal end (630c) of the tie rod (63c) and configured to prevent a movement of the first output shaft (63a) relative to the tie rod (63c) in a first axial direction (F1) and a second stopper arrangement (64b) is arranged at a second distal end (631c) of the tie rod (63c) to prevent a movement of the second output shaft (63b) relative to the tie rod (63c) in a second axial direction (F2).

5. The output shaft assembly according to claim 4, wherein the first stopper arrangement (64a) is received in a distal end cavity (633a) of the first output shaft (63a) being larger in diameter than the first central bore (632a), and/or wherein the second stopper arrangement (64b) is received in a distal end cavity (633b) of the second output shaft (63b) being larger in diameter than the second central bore (632b).

6. The output shaft assembly according to claim 5, wherein the first stopper arrangement (64a) is configured to stop an axial movement of the tie rod (63c) against an axially facing feature (6330a) of the distal end cavity (633a) of the first output shaft (63a), and/or wherein the second stopper arrangement (64b) bis configured to stop an axial movement of the tie rod (63c) against an axially facing feature (6330b) of the distal end cavity (633b) of the second output shaft (63b).

7. The output shaft assembly according to any one of claims 4 to 6, wherein the first stopper arrangement (64a) is arranged coaxially with the first distal end (630c) of the tie rod (63c) and/or the second stopper arrangement (64b) is arranged coaxially with the second distal end (631c) of the tie rod (63c).

8. The output shaft assembly according to any one of claims 4 to 7, wherein one or more of the first stopper arrangement (64a) and the second stopper arrangement (64b) comprises a spacer (641a, 641b) comprising at least a flange portion (640a, 640b) configured to extend radially within the distal end cavity (633a, 633b) of the corresponding output shaft (63a, 63b), and optionally a mounting portion (642a, 642b) disposed within the flange portion (640a, 640b) and surrounding the corresponding distal end (630c, 631c) of the tie rod (63c).

9. The output shaft assembly according to claim 8, wherein at least one spacer (641a, 641b) is secured to the tie rod (63c) with a fastening element (66, 66a, 66b).

10. The output shaft assembly according to claim 8 or 9, wherein one or more of the first stopper arrangement (64a) and the second stopper arrangement (64b) comprises a bearing arrangement (65) arranged between the spacer (641a, 641b) and the axially facing feature (6330a, 6330b) of the distal end cavity (633a, 633b) of the corresponding output shaft (63a, 63b).

11. A differential case assembly (6) for a differential carrier housing (2), comprising:
a differential case (60), wherein the differential case (60) houses a differential gear arrangement (62),
an output shaft assembly (63) according to any one of claims 1 to 10,
wherein the differential gear arrangement (62) is configured to transfer power to the first output shaft (63a) and the second output shaft (63b) of the output shaft assembly (63).

12. The differential case assembly according to claim 11, wherein the tie rod (63c) of the output shaft assembly (63) is configured to extend along a central axis (A) of the differential case (60), optionally through a central space (C) separating the first and second output shafts (63a, 63b), wherein the central space (C) is the area within the differential case (60) for housing the differential gear arrangement (62).

13. The differential case assembly according to claim 11 or 12, wherein the first output shaft (63a) comprises a flange portion (634a) around its distal end cavity (633a) to stop the first output shaft (63a) axially against the differential case (60); and/or wherein the second output shaft (63b) comprises a flange portion (634b) around its distal end cavity (633b) to stop the second output shaft (63b) axially against the differential case (60).

14. The differential case assembly according to claim 12 or 13, wherein a first washer (67a) is arranged axially between the flange portion (634a) of the first output shaft (63a) and a first distal end (60a) of the differential case (60a); and/or wherein a second washer (67b) is arranged axially between the flange portion (634b) of the second output shaft (63b) and a second distal end (60b) of the differential case (60).

15. Use of a tie rod (63c) to retain a first output shaft (63a) and a second output shaft (63b) together in a differential case assembly (60), wherein the tie rod (63c) is configured to extend along a central bore (632a, 632b) of the first output shaft (63a) and the second output shaft (63b).
